Europäisches Patentamt

(19) European Patent Office

Office européen des brevets

(11) Numéro de publication: **0 034 834**
**B1**

(12) **FASCICULE DE BREVET EUROPEEN**

(45) Date de publication du fascicule du brevet: **29.08.84**

(21) Numéro de dépôt: **81101351.5**

(22) Date de dépôt: **25.02.81**

(51) Int. Cl.³: **B 60 P 7/13,** B 64 D 9/00

(54) Verrou pour l'arrimage de frêt dans un véhicule.

(30) Priorité: **26.02.80 FR 8004242**

(43) Date de publication de la demande:
**02.09.81 Bulletin 81/35**

(45) Mention de la délivrance du brevet:
**29.08.84 Bulletin 84/35**

(84) Etats contractants désignés:
**DE GB IT NL**

(56) Documents cités:
**FR-A-2 117 983**
**FR-A-2 255 248**
**FR-A-2 277 024**
**FR-A-2 331 507**
**FR-A-2 335 676**
**US-A-4 121 789**

(73) Titulaire: **PELLETIER-EXPLOITATION Société à
responsabilité limitée dite
8, rue des Gardinoux
F-93300 Aubervilliers (FR)**
Titulaire: **SIREN, Société Anonyme dite
13, rue Saint-Honoré
F-78002 Versailles (FR)**

(72) Inventeur: **Pelletier, Robert
13bis, avenue Montaigne
F-94170 Le Perreux (FR)**

(74) Mandataire: **Casalonga, Axel et al
BUREAU D.A. CASALONGA OFFICE JOSSE &
PETIT Baaderstrasse 12-14
D-8000 München 5 (DE)**

Courier Press, Leamington Spa, England.

## Description

La présente invention se rapporte à un verrou pour l'arrimage de frêt dans un véhicule, notamment pour l'arrimage de conteneurs ou de palettes dans un avion.

On connaît des verrous de ce type qui comprennent un châssis composé de deux longerons reliés entre eux par deux traverses terminales et susceptible d'être fixé au plancher du volume du véhicle destiné à recevoir le frêt à la place d'un ou de plusieurs rouleaux ou billes de roulement équipant le plancher en vue de la manutention des conteneurs ou palettes. Sur ce châssis sont montés un premier et un second loquets articulés l'un sur l'autre à l'une de leurs extrémités par un pivot transversal commun. Le premier desdits loquets comporte à son autre extrémité an axe d'articulation transversal monté en position fixe entre lesdits longerons. Le second desdits loquets comporte à son autre extrémité un axe d'articulation transversal guidé en translation dans des glissières longitudinales des longerons. Des moyens sont prévus pour amener lesdits loquets d'une position de déverrouillage de frêt dans laquelle lesdits loquets sont escamotés vers le bas dans ledit châssis, à une position de verrouillage de frêt dans laquelle les loquets font saillie vers le haut sur le châssis. Enfin, des moyens sont prévus pour bloquer les loquets dans cette position de verrouillage de frêt.

Suivant un mode de réalisation de ces verrous connus (FR—A—2 331 507), les loquets sont sollicités et sont maintenus en position de déverrouillage de frêt par un ressort. Les moyens de blocage prévus sur le verrou maintenant alors les loquets, à l'encontre de l'action de ce ressort, en position de verrouillage de frêt. Pour amener les loquets de la position de verrouillage à la position de déverrouillage de frêt, il suffit d'exercer une pression au pied sur un levier agissant sur lesdits moyens de blocage, de sorte que les loquets libérés viennent, sous l'effet dudit ressort, automatiquement en position de déverrouillage de frêt. Pour amener les loquets de la position de déverrouillage à la position de verrouillage de frêt, il faut par contre exercer une traction à la main sur un anneau prévu sur le pivot commun des deux loquets, pour tirer ces derniers, à l'encontre de l'action du ressort, jusqu'à la position de verrouillage de frêt où les loquets sont alors maintenus par les moyens de blocage précités.

Suivant un autre mode de réalisation de ces verrous connus (FR—A—2 335 676), sur lequel les loquets sont également sollicités et maintenus en position de déverrouillage de frêt par des ressorts et sont maintenus en position de verrouillage de frêt, à l'encontre de l'action desdits ressorts, par les moyens de blocage, le levier prévu pour libérer le blocage des loquets en position de verrouillage de frêt permet, grâce à une système de transmission par engrenages, d'assurer également, par une pression au pied sur ce levier, d'amener les loquets, à l'encontre de l'action desdits ressorts, de la position de déverrouillage à la position de verrouillage de frêt. Toutefois, cette manoeuvre au pied du levier pour faire passer les loquets de la position de déverroullage à la position de verrouillage de frêt implique en effort relativement important et soutenu et le système de transmission à engrenages entre ledit levier et les loquets complique sensiblement la structure du verrou.

La présente invention a pour objet un verrou du type défini ci-dessus qui se distingue des verrous connus par le fait que les loquets peuvent être amenés de la position de verrouillage à la position de déverrouillage, et inversement, chaque fois par une simple pression exercée au pied, la structure du verrou dans son ensemble étant néanmoins très simple. Un autre objet de l'invention est un verrou du type défini ci-dessus qui soit plus compact et en particulier moins long que les verrous connus.

Le verrou connu du FR—A—2 335 676, pour l'arrimage de frêt dans un véhicule, notamment pour l'arrimage de conteneurs ou de pallettes dans un avion, comprend dejà un châssis susceptible d'être fixé au plancher du volume du véhicule destiné à recevoir le frêt et composé de deux longerons reliés entre eux par deux traverses terminales. Un premier et un second loquets sont articulés l'un sur l'autre à l'une de leurs extrémités par un pivot transversal commun. Le premier desdits loquets comporte à son autre extrémité un axe d'articulation transversal monté en position fixe entre les deux longerons du châssis. Le second desdits loquets comporte à son extrémité un axe d'articulation transversal mobile en translation dans des glissières longitudinales desdits longerons. Le verrou comprend, en outre, des moyens pour amener lesdits loquets d'une position de déverrouillage de frêt dans laquelle lesdits loquets sont escamotés vers le bas dans ledit châssis, lesdits axes d'articulation êtant écartés, dans une position de verrouillage de frêt dans laquelle lesdits loquets font saillie vers le haut sur le châssis, lesdits axes d'articulation étant rapprochés l'un de l'autre. Par ailleurs, le verrou comprend des moyens pour bloquer lesdits loquets dans cette position de verrouillage de frêt.

Suivant l'invention, le verrou est équipé d'un ressort sollicitant les loquets vers la position de verrouillage de frêt, et de moyens pour bloquer les loquets dans la position de déverrouillage de frêt à l'encontre de l'action dudit ressort.

Le verrou conforme à l'invention se distingue donc fondamentalement des verrous connus décrits ci-dessus par le fait que les loquets, au lieu d'être sollicités par des ressorts de la position de verrouillage de frêt vers la position de déverrouillage de frêt et d'être maintenus à la position de verrouillage de frêt à l'encontre de l'action de ces ressorts, par des moyens de blocage, sont sollicités en permanence par un ressort vers la positon de verrouillage de frêt et sont maintenus, tant en position de verrouillage qu'en position de déverrouillage de frêt, par des moyens de blocage.

Les loquets et les glissières pour l'axe d'articulation, mobile en translation, du second loquet sont avantageusement réalisés de manière qu'en position de verrouillage de frêt, le pivot commun des deux loquets soit situé au sommet d'un triangle sensiblement isocèle dont les deux autres angles sont définis par l'axe d'articulation fixe du premier loquet et par l'axe d'articulation mobile du second loquet, cet axe d'articulation mobile étant en butée contre l'extrémité des glissières tournée vers l'axe d'articulation fixe du premier loquet.

Pour amener les loquets de la position de verrouillage à la position de déverrouillage de frêt, on exerce une pression au pied de haut en bas sur les loquets, au voisinage du pivot commun de ces derniers, de sorte que l'axe d'articulation mobile du second loquet s'éloigne de l'axe d'articulation fixe du premier loquet et que les deux loquets s'enfoncent dans le châssis en pivotant en sens opposés autour de leurs axes d'articulation respectifs, jusqu'à la position de déverrouillage de frêt où ils sont complétement escamotés dans le châssis et maintenus par des moyens de blocage.

Pour amener les loquets de la position de déverrouillage à la position de verrouillage de frêt, il suffit d'actionner les moyens de blocage des loquets en position de déverrouillage, de sorte que, sous l'action de leur ressort, les loquets se trouvent amenés automatiquement à la position de verrouillage de frêt où ils sont maintenus par des moyens de blocage.

Les moyens de blocage des loquets en position de verrouillage de frêt sont avantageusement montés sur les loquets de manière qu'en position de verrouillage de frêt, la surface d'actionnement desdits moyens soit disposée au-dessus du pivot commun des loquets, Il est ainsi possible, par une pression exercée au pied sur ladite surface d'actionnement, de libérer les loquets se trouvant en position de verrouillage de frêt et de les amener ensuite, à l'encontre de l'action de leur ressort à la position de déverrouillage de frêt jusqu'à leur blocage par les moyens de blocage dans cette position.

Les moyens de blocage des loquets en position de verrouillage de frêt comprennent avantageusement un étrier de blocage dont les deux branches perpendiculaires auxdits axes d'articulation des loquets sont montées pivotantes, entre l'âme transversale et les extrémités libres de l'étrier, sur l'axe d'articulation, mobile en translation, du second loquet. Les extrémités libres des deux branches de cet étrier, tournées vers l'axe d'articulation fixe du premier loquet, sont sollicitées vers le haut autour dudit axe d'articulation mobile par un ressort et sont conformées en crochets ouverts vers le haut. De préférence, lesdits branches comportent chacune à son extrémité libre un axe de guidage extérieur transversal coopérant, sous l'action dudit ressort, avec une glissière inférieure du longeron associé. Cette glissière comprend un rampe qui, lors du passage des loquets de la position de déverrouillage à la position de verrouillage de frêt, fait pivoter vers le bas les extrémité libres en forme de crochets de l'étrier, et, en dessous de l'axe d'articulation fixe du premier loquet, une encoche à flancs sensiblement verticaux. Lorsque les loquets se trouvent en position de verrouillage de frêt, chaque axe de guidage s'engage sous l'action du ressort de l'étrier, vers le haut dans ladite encoche et les crochets aux extrémités libres des branches de l'étrier viennent ainsi s'accrocher depuis les bas sur l'axe d'articulation fixe du premier loquet, en bloquant les axes d'articulation des deux loquets l'un par rapport à l'autre.

Les moyens pour actionner l'étrier de blocage des loquets en position de verrouillage de frêt peuvent être avantageusement formés par un étrier d'actioinnement dont les deux branches, perpendiculaires aux axes d'articulation des loquets sont montées mobiles en translation sur le premier loquet de manière que l'âme dudit étrier, formant la surface d'actionnement se trouve au-dessus des loquets lorsque ces derniers occupent la position de verrouillage de frêt. Les extrémités inférieures libres des branches de l'étrier d'actionnement présentant chacune une axe transversal portant sur la tranche supérieure des branches de l'étrier de blocage, entre l'axe d'articulation de ce dernier sur le second loquet et les extrémités libres des branches de cet étrier de blocage, De plus, l'étrier d'actionnement présente, dans chacune de ses branches, un trou allongé dans le sens longitudinal desdites branches, lesdits trous des branches de l'étrier étant traversés par le pivot commun des deux loquets.

Les moyens de blocage des loquets en position de déverrouillage de frêt peuvent être avantageusement constitués par un levier monté pivotant sur le châssis, par un axe transversal, et sollicités dans un sens par un ressort de rappel, et par une came formée sur le second loquet, autour de l'axe d'articulation mobile en translation, de ce dernier. Cette came fait pivoter ledit levier, à l'encontre de l'action de son ressort, à la fin du mouvement des loquets de la position de verrouillage à la position de déverrouillage de frêt, jusqu'à ce qu'un décrochement formé à la suite de ladite came sur le second loquet libère le levier et permet à ce dernier de venir s'engager derrière de décrochement pour bloquer les loquets en position de déverrouillage de frêt.

En se référant au dessin annexé, on va décrire ci-après plus en détail un mode de réalisation illustratif et non limitatif d'un verrou d'arrimage conforme à l'invention; sur ce dessin:

la fig. 1 est une vue schématique en perspective du plancher d'une soute de frêt d'un avion, équipé de verrous conformes à la présente invention;

la fig. 2 est une vue en plan d'un verrou conforme à l'invention, en position de verrouillage de frêt;

la fig. 3 est une coupe suivant III—III de la fig. 2;

la fig. 4 est une coupe correspondante du verrou, pendant le passage des loquets de la position de verrouillage à la position de déverrouillage de frêt;

la fig. 5 est une coupe correspondante du verrou en position de déverrouillage de frêt.

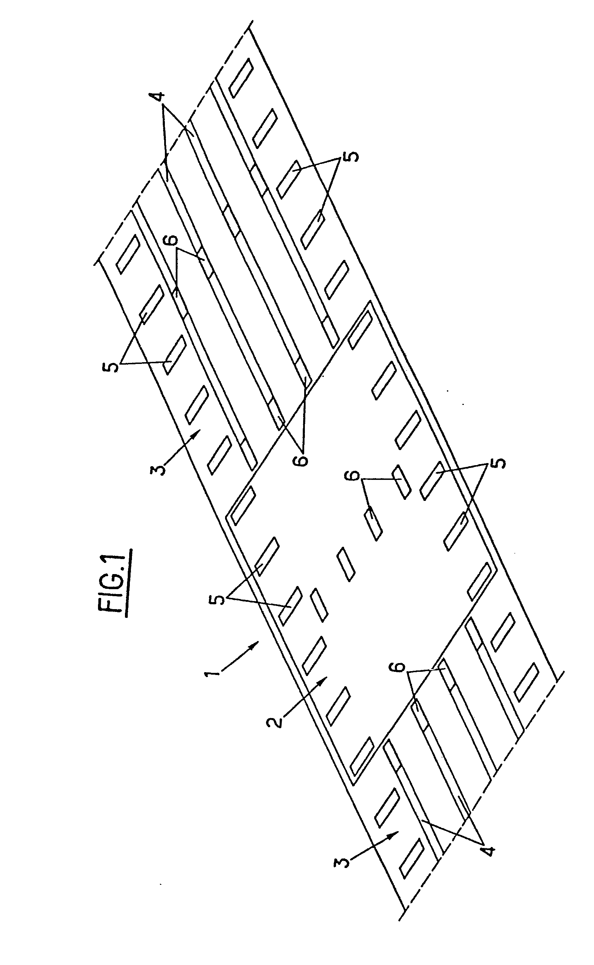

La fig. 1 illustre un plancher 1 d'une soute de frêt d'un avion, ce plancher étant équipé pour le chargement de palettes ou de containers. Le plancher 1 comprend, à l'endroit de la ou des portes de chargement latérales non représentées de la soute, une partie centrale de plancher 2 équipée d'un ensemble de billes de roulement non représentées, régulièrement espacées sur toute la surface de la partie de plancher 2. A la partie de plancher 2 se raccorde, de part et d'autre dans le sens longitudinal de la soute, une partie de plancher 3 équipée de plusieurs rails longitudinaux parallèles 4 munis de rouleaux non représentés. Des guides latéraux 5 sont répartis sur les deux côtés longitudinaux de l'ensemble de plancher 1, ces guides 5 étant escamotables vers le bas à l'endroit de la ou des portes latérales de la soute.

Des verrous 6 sont répartis, en plusieurs rangées transversale, d'une extrémité longitudinale à l'autre du plancher 1. Dans la partie de plancher 2, ces verrous 6 sont fixés dans des évidement prévus dans le plancher. Dans les parties de plancher 3, les verrous 6 sont fixés dans les rails 4 qui sont dépourvus de rouleaux à l'endroit de ces verrous.

Pour charger et fixer le frêt sur le plancher 1, on amène de façon usuelle les palettes ou containers par la ou les portes latérales transversalement sur la partie de plancher 2 équipée de billes et on les pousse transversalement sur la partie de plancher 2 jusqu'à une position transversale alignée avec leur emplacement de fixation définitif sur le plancher 1. Si cet emplacement se trouve sur une partie de plancher 3, on les pousse ensuite dans le sens longitudinal du plancher 1, d'abord sur les billes de la partie de plancher 2 et ensuite sur les rouleaux des rails 4 d'une partie de plancher 3, jusqu'à leur emplacement définitif entre deux rangées de verrous 6. On amène lesdits verrous 6 en position de verrouillage de sorte que les containers ou palettes se trouvent immobilisés dans le sens longitudinal du plancher 1 par les verrous 6 et dans les sens transversal par les guides latéraux 5.

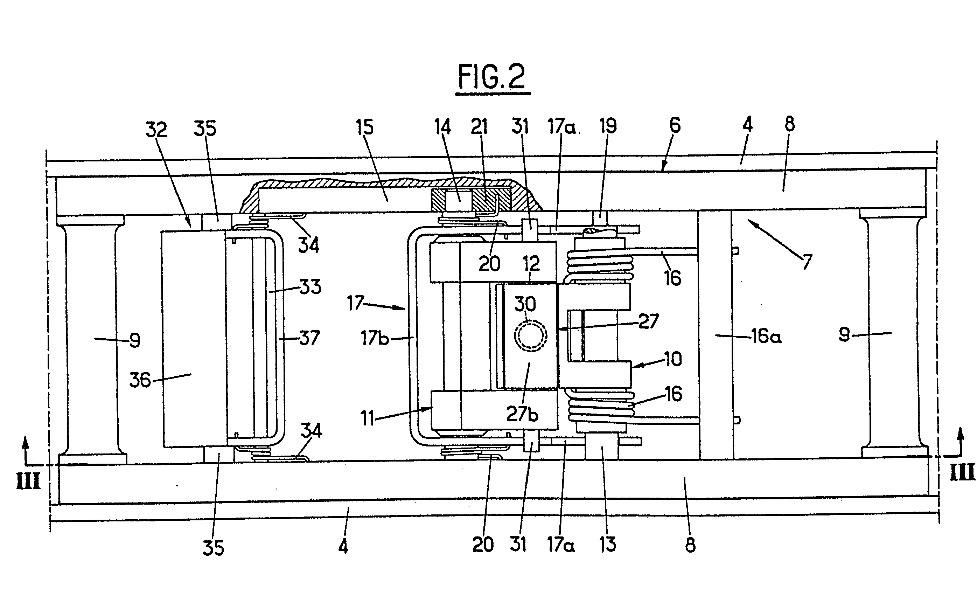

En se référant aux fig. 2 à 5, on va décrire ci-après un mode de réalisation illustratif et non limitatif d'un verrou 6 monté sur l'une des parties de plancher 3, c'est-à-dire dans l'un des rails 4. Les verrous 6 montés sur la partie de plancher 2 sont identique aux verrous 6 équipant les parties de plancher 3, seule leur fixation sur le plancher étant différente dans la mesure où la partie de plancher 2 n'est pas équipée de rails 4.

Selon la fig. 2, le verrou 6 comprend un châssis 7 composé de deux longerons 8 reliés entre eux par deux traverses terminales 9. Des moyens non représentés qui n'entrent pas dans le cadre de la présente invention sont prévus sur le châssis 7 en vue de la fixation de ce dernier dans un rail 4 qui a un profil en U.

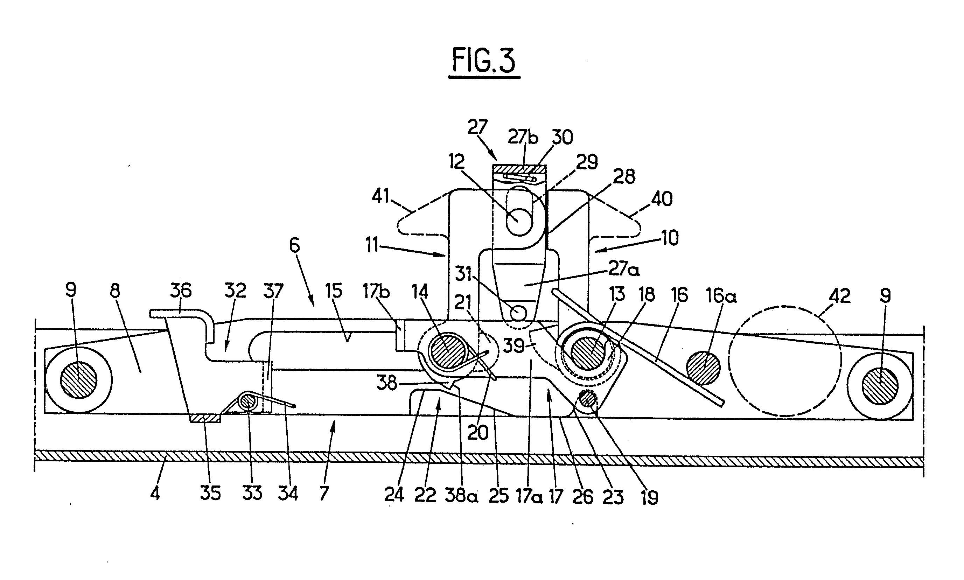

Le dispositif de verrouillage proprement dit comprend deux loquets 10 et 11 articulés l'une sur l'autre à l'une de leurs extrémités par un pivot transversal 12. Chaque loquet 10, 11 présente en coupe longitudinale une forme générale en Z, c'est-à-dire que les deux extrémités de chaque loquet, formant les deux ailes du Z, sont coudées en sens opposé par rapport à la partie centrale formant l'âme du Z. Les deux loquets 10, 11 sont reliés entre eux en position symétrique par le pivot transversal 12 de manière que leurs extrémités coudées reliées entre elles par ledit pivot 12 soient tournées l'une vers l'autre et que leurs autres extrémités coudées soitent éloignées l'une de l'autre (voir fig. 3).

Le loquet 11 présente, à son extrémité d'articulation sur le pivot 12, la forme d'une chape dans laquelle pénètre l'extrémité correspondante du loquet 10.

L'autre extrémité du loquet 10 est articulée sur un axe transversal 13 monté en position fixe entre les longerons 8, tandis que l'autre extrémité du loquet 11 est montée sur un axe transversal 14 dont les deux extrémité sont guidées en translation des des glissières longitudinales internes 15 des longerons 8.

Un ressort 16 prenant appui sur le loquet 10 et sur un axe d'appui transversal fixe 16a sollicite en permanence le loquet 10 autour de l'axe d'articulation 13 dans le sens des aiguilles d'une montre sur la fig. 3.

Un étrier de blocage 17 en U est monté pivotant par ses deux branches 17a, entre l'âme transversale 17b et les extrémités libres desdites branches 17a, sur l'axe d'articulation 14. Les deux branches 17a sont conformées, à leurs extrémités libres tournées vers l'axe d'articulation 13, en crochets 18 ouverts vers le haut et portent en dessous desdits crochets, chacun un axe de guidage transversal 19 faisant saillie vers l'extérieur. L'étrier 17 est sollicité autour de l'axe 14 dans le sens contraire des aiguilles d'une montre sur la fig. 3 par un ressort 20 qui porte contre les branches 17a et dont chaque extrémité libre est engagée dans un trou d'un coulisseau 21 qui est monté mobile en translation dans la glissière 15 de chaque longeron 8 (voir fig. 2). Chaque coulisseau 21 reçoit par ailleurs une extrémité libre de l'axe d'articulation 14.

Selon la fig. 3, chaque longeron 8 présente en outre une glissière inférieure 22 pour l'un des axes de guidage 19 de l'étrier 17. Cette glissière 22 comprend à son extrémité tournée vers l'axe d'articulation fixe 13 une encoche 23 ouverte vers le bas, à flancs sensiblement verticaux, située en dessous de l'axe d'articulation 13 du loquet 10 sur les longerons 8. A son autre extrémité éloignée de l'axe 13, chaque glissière 22 comprend un évidement 24 ouvert vers le bas qui se raccorde par une rampe 25 inclinée vers le vas et une surface de came horizontale 26 à l'encoche 23.

Un étrier d'actionnement 27 transversal est monté mobile en translation parallèlement au plan de l'âme du loquet 10, à savoir verticalement dans la position selon la fig. 3, sur l'extrémité du loquet 10 qui est articulée par le pivot 12 sur l'autre loquet 11. Ladite extrémité du loquet 10 présente à cet effet, de chaque côté, une rainure de guidage latérale 28 pour l'une des branches 27a de l'étrier 27 dont l'âme 27b s'étend au-dessus du pivot 12 des loquets 10 et 11. Chaque branche 27a de l'étrier 27 présente un trou 29 allongé dans le sens de la longueur desdites branches, ces trous 29 étant traversés par le pivot 12 des loquets 10 et 11. Un ressort de compression 30 est intercalé entre le loquet 10 et l'âme 27b de l'étrier 27 pour solliciter ce dernier de manière à èloigner son âme 27b du loquet 10 (vers le haut sur la fig. 3).

Chacune des deux branches 27a de l'étrier 27 comporte, à son extrémité libre, un axe transversal extérieur 31. Ces axes 31 portent, dans la position illustrée sur la fig. 3, sur la tranche supérieure des branches 17a de l'étrier 17, entre l'axe d'articulation 14 et les extrémités libres en forme de crochets 18 desdites branches 17a.

Au voisinage de l'extrémité des glissières 15 opposée à l'axe d'articulation 13 fixe, un levier de blocage 32 est monté pivotant sur un axe d'articulation transversal fixe 33 s'étendant entre les deux longerons 8. Le levier de blocage 32 est sollicité dans le sens des aiguilles d'une montre sur la fig. 3 autour de l'axe 33 par un ressort 34. Une butée 35 prévue de chaque côté du levier 32 pour coopérer avec la face inférieure d'un longeron 8 limite le mouvement de pivotement du levier 32 sous l'action du ressort 34. Une surface d'appui 36 accessible depuis le haut permet de faire pivoter le levier 32 autour de l'axe 33 dans le sens contraire des aiguilles d'une montre, à l'encontre de l'action du ressort 34.

Le levier 32 présente, du côté tourné vers les loquets 10, 11, une traverse 37 destinée à coopérer avec une came 38 qui est prévue sur le loquet 11, à l'extrémité où le loquet 11 est articulé sur l'axe 14, et qui se termine par un décrochement 38a.

En se référant aux fig. 3, 4 et 5, on va décrire ci-après le mode de fonctionnement du verrou conforme à l'invention.

Dans la position de verrouillage de frêt illustrée par la fig. 3, les deux loquets 10 et 11 font saillie vers le haut sur les longerons 8, leurs âmes étant sensiblement verticales. Le blocage des loquets 10, 11 dans cette position est assuré par l'étrier 17. En effet, les crochets 18 formés aux extrémités libres des branches 17a de l'étrier 17 sont engagés, sous l'effet du ressort 20, depuis le bas sur l'axe d'articulation 13 fixe du loquet 10. En même temps, les axes de guidage 19 prévus aux extrémités libres des branches 17a de l'étrier 17 sont engagés dans les encoches verticales 23 des longerons 8. L'étrier 17 étant articulé sur l'axe 14 mobile du loquet 11, il bloque dans cette position les deux loquets 10 et 11 l'un par rapport à l'autre à l'encontre de toute poussée horizontale exercée sur le loquet 10 depuis la droite dans le plan de dessin de la fig. 3. Une poussée horizontale exercée depuis la gauche sur le loquet 11 ne provoque pas non plus de déblocage du fait que les coulisseaux 21 sur lesquels est monté l'axe d'articulation 14 du loquet 11 se trouvent en butée contre l'extrémité de droite des glissières 15 des longerons 8.

Pour débloquer les loquets 10 et 11 de la position de verrouillage de frêt de la fig. 1 et les amener à la position de déverrouillage de frêt, on exerce au pied une poussée de haut en bas sur l'âme 27b de l'étrier 27. Grâce aux trous allongés 29 de ses branches, traversés par le pivot 12, l'étrier 27 coulisse vers le bas par rapport au loquet 10 à l'encontre de l'action du ressort 30. Les axes 31 prévus aux extrémités libres des branches 27a de l'étrier 27 font alors pivoter l'étrier 17 autour de l'axe d'articulation 14, à l'encontre de la force du ressort 20, dans le sens des aiguilles d'une montre sur la fig. 3. Les crochets 18 formés aux extrémités libres des branches 17a de l'étrier 17 se dégagent ainsi vers le bas de l'axe d'articulation fixe 13 et, en même temps, les axes de guidage 19 également prévus aux extrémités libres des branches de l'étrier 17 se dégagent vers le bas des encoches 23 des longerons 8.

Dès que les deux loquets 10, 11 sont ainsi débloqués, l'extrémité surpérieure des trous allongés 29 de l'étrier 27 porte contre le pivot 12 qui subit donc une poussée vers le bas. Le pivot et les deux axes 13 et 14 étant situés aux angles d'un triangle sensiblement isocèle dont le pivot 12 forme le sommet, la poussée exercée vers le bas sur le pivot 12 provoque l'écartement des deux axes d'articulation 13 et 14, à savoir le déplacement vers la gauche sur la fig. 3 de l'axe 14, i'axe 13 étant fixé. Les coulisseaux 21 sur lesquels est monté l'axe 14 se déplacent donc vers la gauche dans les glissières 15 des longerons 8, tandis que les axes 19 de l'étrier 17 monté sur l'axe 14 passent sur les cames 26 et les rampes 25 jusqu'aux évidements 24 des glissières 22. Au cours de ce déplacement vers la guache de l'axe 14, les deux loquets 10, 11 pivotent en sens opposés autour des axes 13 et 14, leur pivot commun 12 se déplaçant vers le bas.

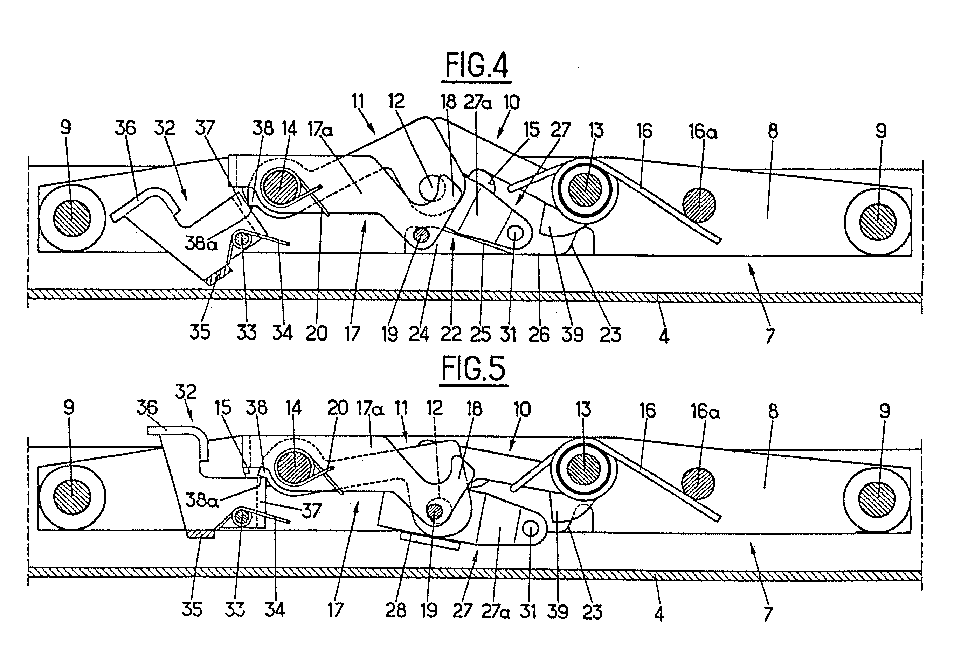

Peu de temps avant que le pivot 12 atteigne le plan horizontal défini par les axes 13 et 14, ce qui correspond à la position d'écartement maximale des deux axes 13 et 14, la came 38 formée à l'extrémité d'articulation du loquet 11 sur l'axe 14 entre en contact avec la traverse 37 du levier 32 et fait pivoter de dernier dans le sens contraire des aiguilles d'une montre sur la fig. 4 autour de l'axe 33, à l'encontre de l'action du ressort 34. Le pivot 12 descend ensuite en dessous du plan horizontal défini par les axes 13 et 14 de sorte que l'axe 14 se rapproche de nouveau de l'axe 13, la came 38 continuant de tourner autour de l'axe 14 jusqu'à libérer le levier 32 lorsque les loquets 10 et 11 sont complètement escamotés en dessous du bord supérieur des longerons 8. Sous l'action de son ressort 34, le levier 32 pivote dans le sens des aiguilles d'une montre et le bord supérieur de sa traverse 37 s'accroche en dessous du décrochement 38a de la came 38, bloquant ainsi les loquets 10 et 11 dans la position de déverrouillage de frêt (fig. 5).

Pendant tout le mouvement de pivotement des loquets 10, 11 de la position de la fig. 3 à la position de la fig. 5, le ressort 16 a été armé.

Pour amener le verrou de la position de déverrouillage de frêt selon la fig. 5 à la position de verrouillage de frêt selon la fig. 3, on exerce au pied une pression vers le bas sur la surface d'actionnement 36 du levier 32. Le levier 32 pivote ainsi dans le sens contraire des aiguilles d'une montre, à l'encontre de l'action de son ressort 34, jusqu'à ce que le bord supérieur de la traverse 37 se dégage du décrochement 38a de la came 38 du loquet 11 libérant ainsi les loquets 10 et 11. Le ressort 16 armé fait alors pivoter le loquet 10 dans le sens des aiguilles d'une montre autour de l'axe 13. Cela entraîne le pivot 12 vers le haut de sorte que le loquet 11 relié au loquet 10 par ledit pivot 12 pivote dans le sens contraire des aiguilles d'une montre autour de son axe d'articulation 14 qui, en même temps se déplace vers la droite dans les glissières 15. L'axe 14 se rapproche donc de l'axe 13 pendant que le pivot 12 et les extrémités des deux loquets 10, 11 articulées l'une sur l'autre par ledit pivot 12 se déplacent vers le haut.

L'étrier 17 articulé sur l'axe 14 se déplace vers la droite conjointement avec l'axe 14. Par conséquent, les deux axes de guidage 19 prévus aux extrémités libres des branches 17a de l'étrier 17 sollicité dans le sens contraire des aiguilles d'une montre autour de l'axe 14 par le ressort 20 passent de l'évidement 24 sur la rampe 25 et sur la came 26. L'étrier 17 pivote ainsi dans le sens des aiguilles d'une montre autour de l'axe 14 de sorte que les crochets 18 formés aux extrémités libres des branches 17a de l'étrier 17 se déplacent vers le bas pour passer en dessous de l'axe 13. Les axes de guidage 19 quittent ensuite la came 26 pour s'engager dans les encoches 23, de sorte que l'étrier 17 peut pivoter dans le sens contraire des aiguilles d'une montre autour de l'axe 14, sous l'action de son ressort 20, et que les crochets 18 s'engagent de bas en haut sur l'axe 13, de sorte que l'étrier 17 assure de nouveau de blocage des deux axes 13 et 14 l'un par rapport à l'autre, donc le blocage des loquets 10 et 11 en positions de verrouillage de frêt selon la fig. 3.

Dans le verrou conforme à l'invention, les loquets 10, 11 sont donc amenés de la position de déverrouillage de frêt où ils sont bloqués par le levier 32, à la position de verrouillage de frêt où ils sont bloqués par l'étrier 17, automatiquement par l'action du ressort 16, après déblocage par une pression exercée au pied sur le levier 32. Le passage des loquets 10 et 11 de la position de verrouillage de frêt à la position de déverrouillage de frêt implique une pression au pied sur l'étrier 27 pour débloquer d'abord les loquets 10 et 11 et pour escamoter ensuite les loquets 10 et 11 en dessous du bord supérieur des longerons 8, avec armement simultané du ressort 16. Pour réduire le plus possible l'effort nécessaire à cet effet, il est avantageux de concevoir le ressort 16 de manière qu'il soit presque détendu en position de verrouillage de frêt. Si, par exemple à la suite d'un encrassement tendant à freiner le mouvement des loquets 10, 11 de la position de déverrouillage de frêt à la position de verrouillage de frêt sous l'action du ressort 16, la force résiduelle de ce dernier ne suffisait pas à rapprocher les deux axes 13, 14 jusqu'à leur blocage réciproque par l'étrier 17, le blocage du verrou en position de verrouillage de frêt pourrait néanmoins se faire sans intervention manuelle sur le verrou par la poussée horizontale exercée sur le loquet 11 (de gauche à droite sur la fig. 3) par le conteneur (ou la palette) lorsque ce conteneur est poussé à l'emplacement auquel il doit être verrouillé. En effet, cette poussée horizontale sur le loquet 11 déplacerait l'axe 14 vers la droite jusqu'à l'extrémité de droite des glissières 15, pour engager les crochets 18 et les axes de guidage 19 sous l'action du ressort 20, sur l'axe 13 et dans les encoches 23, assurant ainsi le blocage des loquets 10 et 11 en position de verrouillage de frêt.

On reconnaît sur les fig. 3, 4 et 5 qu'une came 39 est formée sur le loquet 10, à l'extrémité d'articulation du loquet 10 sur l'axe 13. Cette came 39 a pour fonction d'actionner un interrupteur de fin de course signalant que le verrou se trouve effectivement bloqué en position de verrouillage de frêt.

Le mode de réalisation décrit ci-dessus et représenté sur les dessins annexés, n'a été donné qu'à titre illustratif et non limitatif et de nombreuses modifications et variantes peuvent y être apportées dans le cadre de la présente invention. Ainsi, les deux loquets 10 et 11 peuvent être munis, de façon connue en soi, chacun d'ailes d'ancrage 40, 41 représentées en tirets sur la fig. 3, de façon que les verrous assurent le blocage des containers ou palettes non seulement dans le sens horizontal mais également dans le sens vertical. Dans ce cas, les deux loquets 10 et 11 doivent, en position de déverrouillage de frêt, être escamotés plus profondément dans le chässis 7 de manière que lesdites ailes 40, 41 viennent également se situer en dessous du bord supérieur des longerons 8. Il suffit pour cela de décaler angulairement la came 38 dans le sens contraire des aiguilles d'une montre par rapport à la position représentée de manière qu'elle bloque, en combinaison avec le levier 32, les loquets 10, 11 dans une position dans laquelle le pivot 12 se trouve dans une position plus basse que sur la fig. 5.

Par ailleurs, pour améliorer le roulement des containers ou palettes sur les rangées de rouleaux à l'endroit des verrous qui prennent la place d'un ou de plusieurs rouleaux, il serait possible de monter un rouleau 43 directement sur le verrou, comme indiqué en tirets ur la fig. 3. Il convient cependant de noter que, compte tenu de la faible longueur du verrou dans son ensemble, la prévision d'un tel rouleau 42 sur le châssis du verrou n'est généralement pas indispensable.

Dans le mode de réalisation décrit, le châssis du verrou est fixé dans des rails en U qui sont encastrés dans le plancher 3 de la soute et sont équipés de rouleaux de manutention. Cette fixation s'effectue par des moyens non représentés, par exemple deux axes montés coulissants dans chaque traverse du châssis du verrou, aux deux extrémités de cette traverse, et sollicités vers l'extérieur par un ressort de compression intermédiaire, de manière à pouvoir pénétrer dans des trous ménagés dans les ailes du rail. La fixation des verrous peut cependant, dans le cadre de l'invention, se faire de manière différente, en particulier de façon connue par des ensembles de doigts à têtes élargies et de pistons de serrage, coopérant avec des rails à alvéoles prévus dans le plancher.

Etant donné que par exemple les palettes utilisées pour le frêt aérien sont disponibles en deux tailles normalisées (88 et 96 pouces), il peut être avantageux, afin de pouvoir animer ces deux types de palettes sur un plancher, d'installer sur le plancher des verrous doubles, c'est-à-dire des verrous comprenant, sur un même châssis de plus grande longueur, au moins deux systèmes de verrouillage espacés de manière que l'un ou l'autre des systèmes de verrouillage puisse être utilisé selon qu'il s'agit d'arrimer une palette d'un type ou de l'autre.

Enfin, il y a lieu de remarquer que le verrou conforme 6 l'invention est applicable non seulement aux avions, mais également par exemple aux véhicules de transport routiers ou ferroviaires.

## Revendications

1. Verrou pour l'arrimage de frêt dans un véhicule, notamment pour l'arrimage de conteneurs ou de palettes dans un avion, comprenant un châssis (7) composé de deux longerons (8) reliés entre eux par deux traverses terminales (9) et susceptible d'être fixé au plancher (1) du volume du véhicule destiné à recevoir le frêt, un premier et un second loquets (10, 11) articulés l'un sur l'autre à l'une de leurs extrémités par un pivot (12) transversal commun, le premier (10) desdits loquets comportant à son autre extrémité un axe d'articulation (13) transversal monté en position fixe entre lesdits longerons et le second (11) desdits loquets comportant à son autre extrémité un axe d'articulation (14) transversal guidé en translation dans des glissières (15) longitudinales des longerons, des moyens pour amener lesdits loquets d'une position de déverrouillage de frêt dans laquelle les loquets sont escamotés vers le bas dans le châssis, lesdits axes d'articulation étant écartés, à une position de verrouillage de frêt dans laquelle lesdits loquets font saillie vers le haut sur le châssis, lesdits axes d'articulation étant rapprochés l'un de l'autre, et des moyens (17) pour bloquer les loquets dans cette position de verrouillage de frêt, caractérisé par le fait que le verrou (6) est équipé d'un ressort (16) sollicitant en permanence les loquets (10, 11) vers la position de verrouillage de frêt, et de moyens (32) pour bloquer les loquets dans la position de déverrouillage de frêt à l'encontre de l'action dudit ressort (16) armé dans ladite position de déverrouillage.

2. Verrou suivant la revendication 1, caractérisé par le fait que les loquets (10, 11) et les glissières (15) pour l'axe d'articulation (14), mobile en translation, du second loquet (11) sont réalisés de manière qu'en position de verrouillage de frêt, le pivot commun (12) des deux loquets soit situé au sommet d'un triangle sensiblement isocèle dont les deux autres angles sont définis par l'axe d'articulation fixe (13) du premier loquet (10) et par l'axe d'articulation mobile (14) du second loquet (11), l'axe d'articulation mobile (14) étant en butée contre l'extrémité des glissières (15) tournée vers l'axe d'articulation fixe (13) du premier loquet (10).

3. Verrou suivant la revendication 1 ou 2, caractérisé par le fait que les moyens de blocage (17) des loquets en position de verrouillage de frêt sont montés sur les loquets de manière qu'en position de verrouillage de frêt la surface d'actionnement (27b) desdits moyens soit disposée au-dessus du pivot commun (12) des loquets.

4. Verrou suivant la revendication 3, caractérisé par le fait que lesdits moyens de blocage des loquets en position de verrouillage de frêt comprennent un étrier de blocage (17) dont les deux branches (17a) perpendiculaires auxdits axes d'articulation (13, 14) des loquets sont montées pivotantes, entre l'âme transversale (17b) et les extrémités libres des branches de l'étrier, sur l'axe d'articulation mobile (14) du second loquet (11), et que les extrémités libres des deux branches (17a) de cet étrier, tournées vers l'axe d'articulation fixe (13) du premier loquet (10), sont sollicitées vers le haut autour dudit axe d'articulation mobile (14) par un ressort (20) et sont conformées en crochets (18) ouverts vers le haut.

5. Verrou suivant la revendication 4, caractérisé par le fait que les extrémités libres des branches (17a) de l'étrier de blocage comportent chacune un axe de guidage extérieur (19) coopérant, sous l'action dudit ressort (20), avec une glissière inférieure (22) du longeron (8) associé, cette glissière comprenant une rampe (25) pour faire pivoter vers le bas les extrémités libres en forme de crochets des branches lors du passage des loquets de la position de déverrouillage à la position de verrouillage de frêt, et en dessous de l'axe d'articulation fixe (13) du premier loquet, une encoche (23) à flancs sensiblement verticaux, permettant aux extrémités libres des branches de pivoter vers le haut et aux crochets (18) de s'engager sur l'axe d'articulation fixe (13) en position de verrouillage de frêt.

6. Verrou suivant la revendication 4 ou 5, caractérisé par le fait que les moyens pour actionner l'étrier de blocage (17) des loquets comprennent un étrier d'actionnement (27) dont les deux branches (27a), perpendiculaires aux axes d'articulation (13, 14) des loquets, sont montées mobiles en translation sur le premier loquet (10) de manière que l'âme (27b) dudit étrier se trouve au-dessus des loquets lorsque ces derniers occupent la position de verrouillage de frêt, les extrémités inférieures libres des branches de l'étrier d'actionnement (27) présentant chacune un axe transversal (31) portant dans la position de verrouillage de frêt sur la tranche supérieure des branches de l'étrier de blocage (17), entre l'axe d'articulation mobile (14) et les extrémités libres de branches de l'étrier de blocage (17).

7. Verrou suivant la revendication 6, caractérisé par le fait que l'étrier d'actionnement (27) présente, dans chacune des ses branches (27a), un trou (29) allongé dans le sens longitudinal desdits branches, lesdits trous (29) étant traversés par le pivot commun (12) des deux loquets.

8. Verrou suivant l'une quelconque des revendications précédentes, caractérisé par le fait que les moyens de blocage des loquets en position de déverrouillage de frêt comprennent un levier (32) monté pivotant sur le châssis par un axe transversal (33) et sollicité dans un sens par un ressort de rappel (34), et une came (38) formée sur le second loquet (11), autour de l'axe d'articulation (14) mobile de ce dernier, ladite came (38) se terminant par un décrochement (38a) et coopérant avec ledit levier (32) pour bloquer ledit loquet (11) en position de déverrouillage de frêt.

**Patentansprüche**

1. Vorrichtung zum Verankern der Fracht in einem Fahrzeug, insbesondere zum Verankern von Containern oder Paletten in einem Flugzeug, mit einem Grundrahmen (7), welcher zusammengesetzt ist aus zwei Längsträgern (8), die durch zwei Querträger (9) an den Enden derselben miteinander verbunden sind, und welcher am Boden (1) des zur Aufnahme der Ladung bestimmten Laderaums des Fahrzeugs befestigt werden kann, mit einer ersten und einer zweiten Klinke (10, 11), die jeweils an einem Ende mittels eines querliegenden gemensamen Drehzapfens (12) an einander angelenkt sind, wobei die erste (10) der genannten Klinken in ihrem anderen Ende einen fest zwischen den genannten Längsträgern (8) montierten querliegenden Gelenkholzen (13) besitzt, und die zweite der genannten Klinken an ihrem anderen Ende einem querliegenden Gelenkbolzen (14) besitzt, der in längsverlaufenden Gleitbahnen (15) in den Längsträgern verschieben geführt ist, mit Mitteln um die genannten Klinken aus einer Ladungseintriegelungsstellung, wobei die Klinken noch unten in den Rahmen eingezogen sind und sich die genannten Gelenkholzen in auseinanderliegender Stellung befinden, in eine Ladungsverriegelungsstellung zu überführen, in der die genannten Klinken nach oben über den Rahmen vorstehen, wobei sich die genannten Gelenkbolzen in angenäherter Stellung befinden, sowie mit Mitteln zum Sperren dieser Klinken in dieser Ladungsverriegelungsstellung, dadurch gekennzeichnet, daß die Vorrichtung (6) mit einer Feder (16) versehen ist, die die Klinken (10, 11) ständig in Richtung der Ladungsverriegelungsstellung beaufschlagt, sowie mit Mitteln (32) zum Sperren der Klinken in der Ladungsentriegelungsstellung gegen die Kraft der genannten Feder (16), die in der genannten Entriegelungsstellung gespannt ist.

2. Vorrichtung gemäß Anspruch 1, dadurch gekennzeichnet, daß die Klinken (10, 11) und die Gleitbahnen (15) für den Gelenkbolzen (14) der verschiebbaren zweiten Klinke (11) so ausgeführt sind, daß in der Ladungsverriegelungsstellung der gemeinsame Drehzapfen (12) der beiden Klinken am Scheitelwinkel eines im wesentlichen gleichseitigen Dreiecks steht, dessen andere beiden Winkel durch den festen Gelenkbolzen (13) der ersten Klinke (10) und durch den beweglichen Gelenkbolzen (14) der zweiten Klinke (11) definiert werden, wobei der bewegliche Gelenkbolzen (14) im Anschlag an das dem festen Gelenkbolzen (13) der ersten Klinke (10) zugewandten Ende der Gleitbahnen (15) steht.

3. Vorrichtung gemäß Anspruch 1 oder 2, dadurch gekennzeichnet, daß die Mittel (17) zum Sperren der Klinken in der Ladungsverriegelungsstellung auf den Klinken so montiert sind, daß die Betätigungsfläche (27b) der genannten Mittel in der Ladungsverriegelungsstellung über den gemeinsamen Drehzapfen (12) der Klinken zu liegen kommt.

4. Vorrichtung gemäß Anspruch 3, dadurch gekennzeichnet, daß die genannten Mittel zum Sperren der Klinken in der Ladungsverriegelungsstellung einen Sperrbügel (17) umfassen, dessen zwei senkrecht zu den genannten Gelenkbolzen (13, 14) der Klinken stehende Schenkel (17a) zwischen dem Steg (17b) und den freien Enden der Schenkel des Bügels schwenkbar auf den beweglichen Gelenkbolzen (14) der zweiten Klinke (11) montiert sind, und daß die dem festen Gelenkbolzen (13) der ersten Klinke (10) zugewandten freien Enden der beiden Schenkel (17a) dieses Bügels durch eine Feder (20) um den genannten geweglichen Gelenkbolzen (14) nach oben beansprucht werden und in der Form von nach oben offenen Haken (18) ausgebildet sind.

5. Vorrichtung gemäß Anspruch 4, dadurch gekennzeichnet, daß die freien Enden der Schenkel (17a) des Sperrbügels jeweils eine äußere Führungsachse (19) besitzen, die unter der Kraft der genannten Feder (20) mit einer unteren Gleitbahn (22) des betreffenden Längsträgers (8) zusammenwirkt, wobei diese Gleitbahn eine schiefe Ebene (25) aufweist, um die hakenförmig ausgebildeten freien Enden der Schenkel nach unten zu schwenken, wenn die Klinken aus der Ladungsentreigellungsstellung in die Ladungsverriegelungsstellung übergehen, und unterhalb des festen Gelenkbolzens (13) der ersten Klinke eine Aussparung (23) mit im wesentlichen senkrechten Flanken aufweist, die die freien Enden der Schenkel nach oben kippen läßt und die Haken (18) in der Ladungsverriegelungsstellung um den festen Gelenkbolzen (13) greifen läßt.

6. Vorrichtung gemäß Anspruch 4 oder 5, dadurch gekennzeichnet, daß die Mittel zur Betätigung des Sperrbügels (17) der Klinken einen Betätigungsbügel (27) enthalten, dessen zwei Schenkel (27a), die senkrecht zu den Gelenkbolzen (13, 14) der Klinken stehen, verschiebungsbeweglich auf der ersten Klinke (10) montiert sind, so daß sich der Steg (27b) des genannten Bügels über den Klinken befindet, wenn diese letzteren die Ladungsverriegelungsstellung einnehmen, wobei die unteren freien Enden des Schenkels des Betätigungsbügels (27) jeweils eine Querachse (31) aufweisen, die sich in der Ladungsverriegelungsstellung zwischen den beweglichen Gelenkbolzen (14) und den freien Enden der Schenkel des Sperrbügels (17) auf den oberen Rand der Schenkel des Sperrbügels (17) stützen.

7. Vorrichtung gemäß Anspruch 6, dadurch gekennzeichnet, daß der Betätigungsbügel (27) in jedem seinen Schenkel (27a) ein Langloch (29) in Längsrichtung der genannten Schenkel aufweist, wobei der gemeinsame Drehzapfen (12) der beiden Klinken durch die genannten Langlöcher (29) ragt.

8. Vorrichtung gemäß einem beliebigen der vorstehenden Ansprüche, dadurch gekennzeichnet, daß die Mittel zum Sperren der Klinken in der Ladungsentreigelungsstellung einen Hebel (32), der um eine Querachse (33) schwenkbar am Rahmen gelagert ist und in einer Richtung von einer Rückholfeder (34) beaufschlagt wird, sowie eine an der zweiten Klinke (11) um deren beweglichen Gelenkbolzen (14) herum ausgebildete Nocke (38) umfassen, wobei die genannte Nocke (38) in einen Absatz (38a) endet und mit dem genannten Hebel (32) zum Verriegeln der genannten Klinke (11) in der Ladungsentreigelungsstellung zusammenwirkt.

## Claims

1. A lock for stowing cargo in a vehicle, particularly for stowing containers or pallets in an aircraft, comprising a frame (7) consisting of two longerons (8) joined together by two terminal crossmembers (9) and capable of being fixed to the floor (1) of the vehicle space intended to receive the cargo, a first and a second latch (10, 11) which are articulated on each other at one of their ends by a common transversal pivot (12), the first (10) of the said latches comprising at its other end a transversal articulation axle (13) mounted in a fixed position between the said longerons and the second (11) of the said latches comprising at its other end a transversal articulation axle (14) guided in translation in lengthwise slides (15) of the longerons, means for bringing the said latches from a position in which the cargo is unlocked and in which the latches are retracted downwards in the frame, the said articulation axles being apart, into a cargo locking position in which the said latches project upwards on the frame, the said articulation axles being close to each other and means (17) for locking the latches in this cargo locking position, characterized in that the lock (6) is equipped with a spring (16) stressing the latches (10, 11) continuously into the cargo locking position, and means (32) for locking the latches in the position in which the cargo is unlocked against the action of the said spring (16), set in the said unlocked position.

2. A lock according to claim 1, characterized in that the latches (10, 11) and the slides (15) for the articulation axle (14), which can move in translation, of the second latch (11) are made so that in a cargo locking position the common pivot (12) of both latches is situated at the apex of a substantially isosceles triangle whose two remaining angles are defined by the fixed articulation axle (13) of the first latch (10) and by the movable articulation axle (14) of the second latch (11), the movable articulation axle (14) being in abutment against the end of the slides (15) which is turned towards the fixed articulation axle (13) of the first latch (10).

3. A lock according to claim 1 or 2, characterized in that the means (17) for locking the latches in the cargo locking position are mounted on the latches so that in the cargo locking position the actuation surface (27b) of the said means is arranged above the common pivot (12) of the latches.

4. A lock according to claim 3, characterized in that the said means for locking the latches in the cargo locking position comprise a locking stirrup (17) whose two arms (17a) which are perpendicular to the said articulation axles (13, 14) of the latches are mounted to pivot, between the crossmember (17b) and the free ends of the arms of the stirrup, on the movable articulation axle (14) of the second latch (11), and the free ends of both arms (17a) of this stirrup, which are turned towards the fixed articulation axle (13) of the first latch (10), are stressed upwards around the said movable articulation axle (14) by a spring (20) and are shaped into hooks (18) which are open upwards.

5. A lock according to claim 4, characterized in that each of the free ends of the arms (17a) of the locking stirrup comprises an outer guidance axle (19) cooperating, through the effect of the said spring (20), with a lower slide (22) of the associated longeron (8), this slide incorporating a ramp (25) to make the hook-shaped free ends of the arms pivot downwards when the latches pass from the unlocked position to the cargo locking position and, below the fixed articulation axle (13) of the first latch, a recess (23) with substantially vertical sides, permitting the free ends of the arms to pivot upwards and the hooks (18) to engage on the fixed articulation axle (13) in the cargo locking position.

6. A lock according to claim 4 or 5, characterized in that the means for actuating the stirrup (17) for locking the latches comprise an actuating stirrup (27) whose two arms (27a), which are perpendicular to the articulation axles (13, 14) of the latches, are mounted movable in translation on the first latch (10) so that the crosspiece (27b) of the said stirrup is above the latches when the latter are in the cargo locking position, each of the lower free ends of the arms of the actuating stirrup (27) having a transversal axle (31) which bears, in the cargo locking position, on the upper portion of the arms of the locking stirrup (17), between the movable articulation axle (14) and the free ends of the arms of the locking stirrup (17).

7. A lock according to claim 6, characterized in that the actuating stirrup (27) has, in each of its arms (27a), a hole (29) elongated in the lengthwise direction of the said arms, the common pivot (12) of both latches passing through the said holes (29).

8. A lock according to any one of the preceding claims, characterized in that the means for locking the latches in the position in which the cargo is unlocked comprise a lever (32) mounted pivoting on the frame by means of a transversal axle (33) and stressed in one direction by a return spring (34), and a cam (38) provided on the second latch (11), around the movable articulation axle (14) of the latter, the said cam (38) ending in a step (38a) and cooperating with the said lever (32) to lock the said latch (11) in the position in which the cargo is unlocked.

FIG.1

# FIG.2

0 034 834

# FIG.3

0 034 834

FIG.4

FIG.5